# EUROPEAN PATENT APPLICATION

(11) **EP 4 726 794 A1**
(43) Date of publication of application: **15.04.2026**
(21) Application number: 25206764.0
(22) Date of filing: 06.10.2025
(51) Int. Cl.: H01M 4/04, H01M 4/134, H01M 4/38, H01M 4/62, H01M 4/66, H01M 10/052

(54) **ELECTRODES AND RECHARGEABLE LITHIUM BATTERIES INCLUDING THE SAME**

(30) Priority: 08.10.2024 KR 20240137043
(71) Applicant: SAMSUNG SDI CO., LTD., Yongin-si, Gyeonggi-do 17084 (KR)
(72) Inventor: CHOI, Jewon, 17084 Gyeonggi-do (KR); KIM, Eunji, 17084 Gyeonggi-do (KR); CHO, Yunshik, 17084 Gyeonggi-do (KR); JUNG, Kyunghwa, 17084 Gyeonggi-do (KR); LEE, Kukjoo, 17084 Gyeonggi-do (KR); PARK, Sujin, 17084 Gyeonggi-do (KR); CHO, Minho, 17084 Gyeonggi-do (KR); KIM, Hana, 17084 Gyeonggi-do (KR); LEE, Jungmin, 17084 Gyeonggi-do (KR); NAM, Junghyun, 17084 Gyeonggi-do (KR)
(74) Representative: Michalski Hüttermann & Partner Patentanwälte mbB

(57) **Abstract**

An electrode may include a current collector, a coating layer on the current collector, and an active (e.g., electrically active) material layer on the coating layer, wherein the coating layer includes a carbon-based conductive (e.g., electrically conductive) material and a copolymer binder, and the copolymer binder includes about 5 mol% to about 20 mol% of a hydrophilic structural unit and about 80 mol% to about 95 mol% of a hydrophobic structural unit, based on 100 mol% of the copolymer binder. The electrode may maximize or increase capacity (e.g., electrical capacity) while minimizing or reducing production cost, thereby ensuring long cycle-life characteristics and improving or enhancing high-voltage characteristics and high-temperature storage characteristics. The rechargeable lithium battery including the electrode may exhibit high initial charge/discharge capacity and efficiency even under high voltage driving conditions and may implement long cycle-life characteristics.

## Description

### BACKGROUND

### 1. Field

One or more embodiments of the present disclosure relate to an electrode, an electrode assembly including the electrode, and a rechargeable lithium battery including the electrode assembly.

### 2. Description of the Related Art

Portable information devices, such as a cell phone, a laptop, a smart phone, and/or the like, and/or electric vehicles utilize rechargeable lithium batteries. Research and development has been conducted to utilize rechargeable lithium batteries having easy portability and high energy density as a driving power source for hybrid vehicles and/or electric vehicles and/or a power storage source for energy storage systems.

One or more types or kinds of electrodes have been investigated to implement rechargeable lithium batteries suitable for these applications. As the need for large-sized, high-capacity (e.g., high electrical capacity), and/or high-energy-density rechargeable lithium batteries continues to grow, it is desirable to develop electrodes that can increase or enhance capacity (e.g., electrical capacity) while ensuring safety and that can operate at high voltages.

### SUMMARY

One or more aspects of embodiments of the present disclosure are directed toward an electrode capable of implementing high density (e.g., high energy density), high capacity (e.g., high electrical capacity), and long cycle-life characteristics.

Additional aspects of embodiments will be set forth in part in the description which follows and, in part, will be apparent from the description or may be learned by practice of the presented embodiments of the disclosure.

In one or more embodiments, an electrode includes a current collector, a coating layer on the current collector, and an active material layer (e.g., an electrically active material layer) on the coating layer, wherein the coating layer includes a carbon-based conductive (e.g., electrically conductive) material and a copolymer binder, and the copolymer binder includes about 5 mol% to ≤ 20 mol% of a hydrophilic structural unit and about 80 mol% to ≤ 95 mol% of a hydrophobic structural unit, based on 100 mol% of the copolymer binder.

In one or more embodiments, an electrode assembly includes a stack in which a negative electrode, a separator, and a positive electrode are sequentially stacked, wherein at least one selected from the negative electrode and the positive electrode is the electrode as described in one or more embodiments.

In one or more embodiments, a rechargeable lithium battery includes the electrode assembly as described in one or more embodiments and an electrolyte.

The electrode according to one or more embodiments may maximize or increase capacity (e.g., electrical capacity) while minimizing or reducing production cost, thereby ensuring long cycle-life characteristics and improving or enhancing high-voltage characteristics and high-temperature storage characteristics. The rechargeable lithium battery including the electrode may exhibit high initial charge/discharge capacity and efficiency even under high voltage driving conditions and may implement long cycle-life characteristics.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.

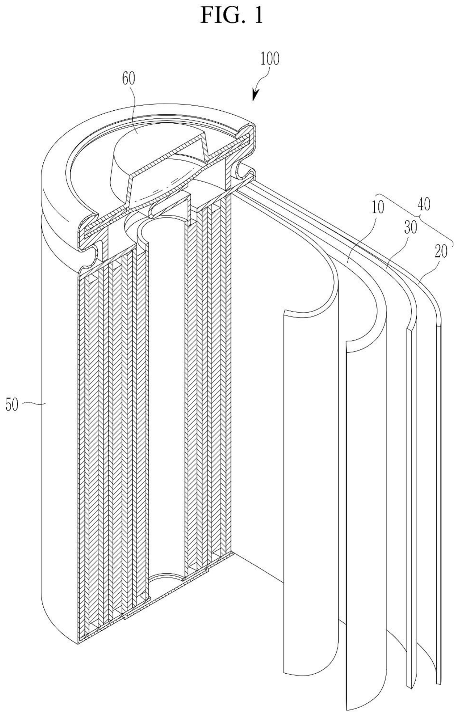

FIGS. 1-4 are views schematically illustrating a rechargeable lithium battery according to one or more embodiments.

### DETAILED DESCRIPTION

Hereinafter, embodiments of the present disclosure will be described in more detail so that those of ordinary skill in the art can easily implement them. However, the subject matter of the present disclosure may be embodied in one or more suitable forms and should not be construed as being limited to the embodiments set forth herein.

The terminology used herein is used to describe embodiments only and is not intended to limit the scope of the present disclosure.

The singular expression includes the plural expression unless the context clearly dictates otherwise.

The utilization of "may" if (e.g., when) describing embodiments of the present disclosure refers to "one or more embodiments of the present disclosure."

As utilized herein, the terms "substantially," "about," or similar terms are used as terms of approximation and not as terms of degree and are intended to account for the inherent deviations in measured or calculated values that would be recognized by those of ordinary skill in the art. "About" as used herein is inclusive of the stated value and refers to being within an acceptable range of deviation for the particular value as determined by one of ordinary skill in the art, considering the measurement in question and the error associated with measurement of the particular quantity (e.g., the limitations of the measurement system). For example, "about" may refer to being within one or more standard deviations or within ±30%, ±20%, ±10%, or ±5% of the stated value.

In the context of the present application and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

As used herein, "combination thereof" refers to a mixture, a laminate, a composite, a copolymer, an alloy, a blend, a reaction product, and/or the like of the constituents.

Herein, it should be understood that the terms, such as "includes," "including," "have," or "having," are intended to designate the presence of an embodied feature, number, step, element, or a combination thereof, but it does not preclude the possibility of the presence or addition of one or more other features, number, step, element, or a combination thereof. For example, it should be understood that the term "comprise(s)/comprising," "include(s)/including," or "have/has/having" specifies the presence of stated features, integers, steps, operations, elements, and/or components, but do not preclude the presence or addition of one or more other features, integers, steps, operations, elements, components, and/or groups thereof. Also, the terms "comprise(s)/comprising," "include(s)/including," "have/has/having," or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

In the drawings, the thickness of layers, films, panels, regions, and/or the like may be exaggerated for clarity, and like reference numerals designate like elements throughout the specification.

It will be understood that if (e.g., when) an element, such as a layer, a film, a region, or a substrate, is referred to as being "on" another element, it may be directly on the other element or intervening elements may also be present therebetween. In contrast, if (e.g., when) an element is referred to as being "directly on" another element, there are no intervening elements present therebetween.

The term, "layer," herein includes not only a shape formed or provided on the whole surface if (e.g., when) viewed from a plan view (e.g., in plan view), but also a shape formed or provided on a partial surface.

The average particle diameter may be measured by a method that is generally available to or generally used by those skilled in the art, for example, by a particle size analyzer and/or by a transmission electron microscope image and/or a scanning electron microscope image. In one or more embodiments, it may be feasible to obtain an average particle diameter value by measuring using a dynamic light scattering method, performing data analysis, counting the number of particles for each particle size range, and calculating from this data. Unless otherwise defined, the average particle diameter may refer to the diameter (D₅₀) of particles having a cumulative volume of 50 volume% in the particle size distribution. As used herein, if (e.g., when) a definition is not otherwise provided, the average particle diameter refers to a diameter (D₅₀) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and/or the like.

"Metal" is interpreted as a concept including ordinary metals, transition metals, and metalloids (semi-metals).

### Electrode

In one or more embodiments, an electrode may include a current collector, a coating layer on the current collector, and an active material layer (e.g., an electrically active material layer) on the coating layer, wherein the coating layer includes a carbon-based conductive (e.g., electrically conductive) material and a copolymer binder, and the copolymer binder includes about 5 mol% to ≤ 20 mol% of a hydrophilic structural unit and about 80 mol% to ≤ 95 mol% of a hydrophobic structural unit, based on 100 mol% of the copolymer binder.

### Coating Layer

In an electrode according to one or more embodiments, because a coating layer is on a current collector, the active material layer may be prevented from being detached from the current collector during subsequent manufacturing processes of the active material layer, such as pressurizing (compressing) and/or cutting, the penetration resistance of the current collector may be reduced (or a degree or occurrence of the penetration resistance of the current collector may be reduced), and the internal resistance or impedance (e.g., the internal electrical resistance or the internal electrical impedance) of the electrode including the current collector may be reduced (or a degree or occurrence of the internal resistance or impedance (e.g., the internal electrical resistance or the internal electrical impedance) of the electrode including the current collector may be reduced). A rate at which the coating layer is covered may be controlled by a surface etching area of the gravure or micro gravure metal roll of the coating machine.

A thickness of the coating layer may be about 0.3 µm to ≤ 5.0 µm, for example, about 0.4 µm to ≤ 4.5 µm or about 0.5 µm to ≤ 4.0 µm. If (e.g., when) the thickness of the coating layer satisfies the foregoing ranges, the coating layer may be formed or provided without surface defects, and if (e.g., when) an active material layer (e.g., an electrically active material layer) is formed or provided on the coating layer, an increase in electrical resistance within the interface therebetween may be suppressed or reduced, and the adhesive strength between the active material layer and the current collector may be improved or enhanced, thereby improving or enhancing the cycle-life characteristics of the rechargeable lithium battery.

A loading level of the coating layer refers to a weight of the coating layer coated relative to the unit surface area of one surface or both surfaces (e.g., two opposite surfaces) of the current collector, and the coating layer may have a loading level of about 0.2 g/m² to ≤ 3 g/m², and, for example, may have a loading level of about 0.5 g/m² to ≤ 2 g/m². If (e.g., when) the loading level of the coating layer is adjusted to the foregoing ranges, if (e.g., when) an active material layer (e.g., an electrically active material layer) is formed or provided on the coating layer, an increase in electrical resistance within the interface between the coating layer and the active material layer may be suppressed or reduced, and the adhesive strength between them may be improved or enhanced, such that the electrical resistance within the interface may be lowered, thereby improving or enhancing the output characteristics and cycle-life characteristics of the rechargeable lithium battery.

In one or more embodiments, the coating layer may be formed or provided to cover a portion of at least one surface of the current collector or to cover the whole surface of the current collector.

In an electrode according to one or more embodiments, the coating layer may include a carbon-based conductive (e.g., electrically conductive) material. By including a carbon-based conductive (e.g., electrically conductive) material in the coating layer, the internal resistance (e.g., internal electrical resistance) of the electrode may be reduced, thereby improving or enhancing high-power characteristics and power density, and current may be supplied uniformly (e.g., substantially uniformly) to the electrode, thereby improving or enhancing power density.

The carbon-based conductive material is not particularly limited as long as it has electronic conductivity that allows smooth charge transfer between the current collector and the active material layer. For example, the carbon-based conductive material may include natural graphite, artificial graphite, carbon black, Denka black, Ketjen black, a carbon nanotube, a carbon nanofiber, graphene, or a combination thereof.

Based on the total 100 wt% of the coating layer, the carbon-based conductive material may be included in an amount of about 20 wt% to ≤ 80 wt%, for example, about 25 wt% to ≤ 75 wt%, about 30 wt% to ≤ 70 wt%, about 35 wt% to ≤ 65 wt%, or about 40 wt% to ≤ 60 wt%. If (e.g., when) an amount of the carbon-based conductive material is within the foregoing ranges, the internal resistance (e.g., the internal electrical resistance) of the electrode may be reduced to improve or enhance high-power characteristics and power density, and current may be supplied to the electrode uniformly (e.g., substantially uniformly) to improve or enhance the power density.

In an electrode according to one or more embodiments, the coating layer may include a copolymer binder, and the copolymer binder may include about 5 mol% to ≤ 20 mol% of a hydrophilic structural unit and about 80 mol% to ≤ 95 mol% of a hydrophobic structural unit, based on 100 mol% of the copolymer binder. By including hydrophilic structural units and hydrophobic structural units in the copolymer binder within the foregoing ranges, a crosslinked structure may be formed or provided through phase separation of the structural units in the copolymer, thereby improving or enhancing the elasticity of the binder and preventing volume expansion and/or shrinkage (or reducing a degree or occurrence of volume expansion and/or shrinkage) of the active material included in the active material layer.

The copolymer binder may be phase-separated by including hydrophilic structural units and hydrophobic structural units within the foregoing ranges and may exhibit a crosslinked structure through phase separation. At this time, the phase separation induced by the distribution of hydrophilic structural units and hydrophobic structural units may play an important role in suppressing or reducing the expansion of the plate volume by forming a crosslinking point. The phase separation properties of copolymer binders having different crosslinking degrees may be confirmed by small angle X-ray spectroscopy (SAXS). An electrode including a coating layer according to one or more embodiments may exhibit a peak at about 0.01 Å⁻¹ to ≤ 5 Å⁻¹ if (e.g., when) small-angle X-ray scattering is measured. If (e.g., when) a peak is in the foregoing range, it may be seen that the structure has a nanometer size through phase separation properties, and through this, the crosslinking rate may be improved or enhanced.

The copolymer binder may be a copolymer in a form including a random copolymer, a block copolymer, or a combination thereof.

The copolymer binder may include about 5 mol% to ≤ 20 mol% of a hydrophilic structural unit and about 80 mol% to ≤ 95 mol% of a hydrophobic structural unit based on 100 mol% of the copolymer binder.

In one or more embodiments, the hydrophilic structural unit may be a unit derived from a monomer including a hydrophilic functional group, and the hydrophilic functional group may be at least one selected from among a carboxylic acid group, a sulfonic acid group, a phosphoric acid group, an acid anhydride group, a hydroxyl group, and a salt thereof, but embodiments of the present disclosure are not necessarily limited thereto, and any suitable group that may be used as a hydrophilic functional group in the relevant technical field may be used. The hydrophilic structural unit may include a unit derived from one or more monomers selected from among acrylic acid, maleic acid, methacrylic acid, itaconic acid, fumaric acid, 2-hydroxyethyl acrylate, vinyl acetate, and vinyl alcohol.

Based on 100 mol% of the copolymer binder, the hydrophilic structural unit may be included in an amount of about 5 mol% to ≤ 20 mol%, for example, about 5 mol% to ≤ 15 mol%, about 10 mol% to ≤ 20 mol%, or about 10 mol% to ≤ 15 mol%. If (e.g., when) the hydrophilic structural unit is included within the foregoing ranges, a crosslinked structure may be formed or provided through phase separation of the structural unit within the copolymer, thereby improving or enhancing the elasticity of the binder and preventing volume expansion and/or shrinkage (or reducing a degree or occurrence of volume expansion and/or shrinkage) of the active material included within the active material layer.

The hydrophobic structural unit may include a unit derived from at least one monomer selected from among an aromatic vinyl monomer, an olefin monomer, an unsaturated carboxylic acid alkyl ester monomer, a (meth)acrylic acid monomer, and an unsaturated carboxylic acid amide monomer.

Examples of the aromatic vinyl monomer may include styrene, p-methylstyrene, m-methylstyrene, o-methylstyrene, o-t-butylstyrene, m-t-butylstyrene, p-t-butylstyrene, p-chlorostyrene, o-chlorostyrene, and/or the like. In one or more embodiments, the aromatic vinyl monomer may be styrene.

Examples of the olefin monomers may include ethylene, propylene, and/or butylene. In one or more embodiments, the olefin monomer may be ethylene and/or propylene.

Examples of the unsaturated carboxylic acid alkyl ester monomer may include methyl (meth)acrylate, ethyl (meth)acrylate, butyl (meth)acrylate, isopropyl (meth)acrylate, octyl (meth)acrylate, 2-ethylhexyl (meth)acrylate, isobutyl (meth)acrylate, pentyl (meth)acrylate, n-hexyl (meth)acrylate, isoamyl (meth)acrylate, lauryl (meth)acrylate, stearyl (meth)acrylate, isobornyl (meth)acrylate, and/or the like.

Examples of the (meth)acrylic acid monomer may include methacrylic acid, acrylic acid, itaconic acid, fumaric acid, maleic acid, and/or the like.

Examples of the unsaturated carboxylic acid amide monomer may include (meth)acrylamide, N-methylacrylamide, N-methylmethacrylamide, N,N-dimethylacrylamide, N,N-dimethylmethacrylamide, N-hydroxymethyl acrylamide, N-hydroxymethyl methacrylamide, N-butoxymethyl acrylamide, N-butoxymethyl methacrylamide, isobutoxymethyl acrylamide, isobutoxymethyl methacrylamide, and/or the like.

The hydrophobic copolymer may further include additional copolymerizable monomers. The additional copolymerizable monomers may include 2-hydroxyethyl (meth)acrylate, 2-hydroxypropyl (meth)acrylate, 2-hydroxybutyl (meth)acrylate, 2-hydroxy-3-phenoxypropyl (meth)acrylate, 2-acryloxyethyl-2-hydroxyethyl-phthalic acid, ethoxy-diethylene glycol (meth)acrylate, methoxy-triethylene glycol (meth)acrylate, tetrahydrofurfuryl (meth)acrylate, phenoxy-polyethylene glycol (meth)acrylate, phenoxy diethylene glycol (meth)acrylate, phenoxy ethyl (meth)acrylate, methoxylethyl (meth)acrylate, glycidyl (meth)acrylate, (meth)acrylonitrile, 2-acrylamide-2-methylpropanesulfonic acid, and 2-methacryloyloxyethylamide phosphate.

Based on 100 mol% of the copolymer binder, the hydrophobic structural unit may be included in an amount of about 80 mol% to ≤ 95 mol%, for example, about 80 mol% to ≤ 90 mol%, about 85 mol% to ≤ 95 mol%, or about 85 mol% to ≤ 90 mol%. If (e.g., when) the hydrophobic structural unit is included within the foregoing ranges, a crosslinked structure may be formed or provided through phase separation of the structural unit within the copolymer, thereby improving or enhancing the elasticity of the binder and preventing volume expansion and/or shrinkage (or reducing a degree or occurrence of volume expansion and/or shrinkage) of the active material included within the active material layer.

Based on 100 wt% of the coating layer, the copolymer binder may be included in an amount of about 20 wt% to ≤ 80 wt%, for example, about 25 wt% to ≤ 75 wt%, about 30 wt% to ≤ 70 wt%, about 35 wt% to ≤ 65 wt%, or about 40 wt% to ≤ 60 wt%. If (e.g., when) the amount of the copolymer binder is within the foregoing ranges, the internal resistance (e.g., the internal electrical resistance) of the electrode may be reduced to improve or enhance high-power characteristics and power density, and current may be supplied to the electrode uniformly (e.g., substantially uniformly) to improve or enhance the power density.

The coating layer may further include a binder in addition to the copolymer binder, and the binder may serve to attach materials within the coating layer to each other and to adhere the coating layer to a current collector.

The binder may include a water-insoluble binder, a water-soluble binder, or a combination thereof.

The water-insoluble binder may include polyvinylchloride, carboxylated polyvinylchloride, polyvinylfluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber-based binder and/or a polymer resin binder. The rubber-based binder may be selected from among a styrene-butadiene rubber (SBR), an acrylated styrene-butadiene rubber, an acrylonitrile-butadiene rubber (ABR), an acrylic rubber, a butyl rubber, a fluorine rubber, and a combination thereof. The polymer resin binder may be selected from among polyethylene oxide, polyvinylpyrrolidone, polyepichlorohydrin, polyphosphazene, polyacrylonitrile, an ethylene propylene diene copolymer, polyvinyl pyridine, chlorosulfonated polyethylene, latex, a polyester resin, an acrylic resin, a phenol resin, an epoxy resin, polyvinyl alcohol, and a combination thereof.

If (e.g., when) a water-soluble binder is used as the binder, a cellulose-based compound capable of imparting or increasing viscosity may further be included. As the cellulose-based compound, one or more of carboxymethyl cellulose, hydroxypropyl methylcellulose, methyl cellulose, or alkali metal salts thereof may be mixed and used. The alkali metal may be sodium (Na), potassium (K), and/or lithium (Li).

### Active Material Layer

An electrode according to one or more embodiments may include an active material layer (e.g., an electrically active material layer) coated on the surface of a current collector.

A thickness of the active material layer may be about 80 µm to ≤ 250 µm, for example, about 80 µm to ≤ 230 µm, about 80 µm to ≤ 230 µm, or about 80 µm to ≤ 210 µm.

### Negative Electrode Active Material Layer

If (e.g., when) the electrode according to one or more embodiments is a negative electrode, the active material may include a material capable of reversibly intercalating/deintercalating lithium ions, lithium metal, an alloy of lithium metal, a material capable of doping and dedoping lithium, and/or a transition metal oxide.

The material capable of reversibly intercalating/deintercalating lithium ions may include, for example, crystalline carbon, amorphous (e.g., non-crystalline) carbon, or a combination thereof as a carbon-based active material (e.g., a carbon-based electrically active material). The crystalline carbon may be irregular or sheet (e.g., substantially sheet), flake (e.g., substantially flake), spherical (e.g., substantially spherical), or fiber (substantially fiber) shaped natural graphite and/or artificial graphite. The amorphous carbon may be a soft carbon, a hard carbon, a mesophase pitch carbonization product, calcined coke, and/or the like.

The lithium metal alloy may include an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn).

The material capable of doping/dedoping lithium may be a Si-based active material and/or a Sn-based active material. The Si-based active material may include silicon, a silicon-carbon composite, SiOₓ (wherein 0 < x ≤ 2; e.g., SiO₂), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and a combination thereof, for example, Mg, Ca, Sr, Ba, Ra, scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), Al, gallium (Ga), Sn, In, thallium (TI), Ge, phosphorus (P), arsenic (As), Sb, bismuth (Bi), sulfur (S), selenium (Se), tellurium (Te), polonium (Po), and a combination thereof), or a combination thereof. The Sn-based active material may be Sn, SnOₖ (wherein 0 < k ≤ 2; e.g., SnO₂), a Sn alloy, or a combination thereof.

The silicon-carbon composite may be a composite of silicon and amorphous (e.g., non-crystalline) carbon. An average particle diameter (D₅₀) of the silicon-carbon composite particles may be, for example, about 0.5 µm to ≤ 20 µm. According to one or more embodiments, the silicon-carbon composite may be in the form of silicon particles and amorphous (e.g., non-crystalline) carbon coated on the surface of the silicon particles. For example, it may include a secondary particle (core) in which silicon primary particles are assembled and an amorphous (e.g., non-crystalline) carbon coating layer (shell) on the surface of the secondary particle. The amorphous carbon may also be present between the silicon primary particles, and, for example, the silicon primary particles may be coated with amorphous (e.g., non-crystalline) carbon. The secondary particles may exist dispersed in an amorphous (e.g., non-crystalline) carbon matrix.

The silicon-carbon composite may further include crystalline carbon. For example, the silicon-carbon composite may include a core including crystalline carbon and silicon particles and an amorphous (e.g., non-crystalline) carbon coating layer on the surface of the core. The crystalline carbon may be artificial graphite, natural graphite, or a combination thereof. The amorphous carbon may include soft carbon, hard carbon, a mesophase pitch carbonized product, and/or calcined coke.

If (e.g., when) the silicon-carbon composite includes silicon and amorphous (e.g., non-crystalline) carbon, a content (e.g., amount) of silicon may be about 10 wt% to ≤ 50 wt% and a content (e.g., amount) of amorphous (e.g., non-crystalline) carbon may be about 50 wt% to ≤ 90 wt% based on 100 wt% of the silicon-carbon composite. In one or more embodiments, if (e.g., when) the composite includes silicon, amorphous (e.g., non-crystalline) carbon, and crystalline carbon, a content (e.g., amount) of silicon may be about 10 wt% to ≤ 50 wt%, a content (e.g., amount) of crystalline carbon may be about 10 wt% to ≤ 70 wt%, and a content (e.g., amount) of amorphous (e.g., non-crystalline) carbon may be about 20 wt% to ≤ 40 wt% based on 100 wt% of the silicon-carbon composite.

In one or more embodiments, a thickness of the amorphous carbon coating layer may be about 5 nm to ≤ 100 nm. An average particle diameter (D₅₀) of the silicon particles (primary particles) may be about 10 nm to ≤ 1 µm or about 10 nm to ≤ 200 nm. The silicon particles may exist as silicon alone, in the form of a silicon alloy, or in an oxidized form. The oxidized form of silicon may be represented by SiOₓ (wherein 0 < x ≤ 2; e.g., SiO₂). At this time, the atomic content (e.g., amount) ratio of Si:O, which indicates a degree of oxidation, may be about 99:1 to about 33:67. As used herein, if (e.g., when) a definition is not otherwise provided, an average particle diameter (D₅₀) indicates a diameter of a particle where an accumulated volume is about 50 volume% in a particle distribution.

The Si-based active material and/or the Sn-based active material may be mixed with the carbon-based active material. If (e.g., when) the Si-based active material or the Sn-based active material and the carbon-based active material are mixed and used, the mixing ratio may be a weight ratio of about 1:99 to about 90:10.

If (e.g., when) the electrode according to one or more embodiments is a negative electrode, the active material layer may include the active material and may further include a binder and/or a conductive (e.g., electrically conductive) material.

The binder may serve to well or suitably adhere the active material particles to each other and also to adhere the active material to the current collector. The binder may be a non-aqueous (e.g., water-insoluble) binder, an aqueous (e.g., water-soluble) binder, a dry binder, or a combination thereof.

The non-aqueous (e.g., water-insoluble) binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous (e.g., water-soluble) binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If (e.g., when) an aqueous (e.g., water-soluble) binder is used as the negative electrode binder, a cellulose-based compound capable of imparting or increasing viscosity may further be included. As the cellulose-based compound, one or more of carboxymethyl cellulose, hydroxypropyl methylcellulose, methyl cellulose, or alkali metal salts thereof may be mixed and used. The alkali metal may be sodium (Na), potassium (K), and/or lithium (Li).

The dry binder may be a polymer material (e.g., a polymeric material) capable of becoming fiber, and may be, for example, polytetrafluoroethylene, polyvinylidene fluoride, a polyvinylidene fluoride-hexafluoropropylene copolymer, polyethylene oxide, or a combination thereof.

The conductive (e.g., electrically conductive) material may be included to provide electrode conductivity (e.g., electrical conductivity), and any suitable electrically conductive material may be used as a conductive (e.g., electrically conductive) material unless it causes a chemical change (e.g., an undesirable chemical change). Examples of the conductive material may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminum, silver, and/or the like; a conductive (e.g., electrically conductive) polymer, such as polyphenylene and/or a polyphenylene derivative; or a mixture thereof.

### Positive Electrode Active Material Layer

If (e.g., when) the electrode according to one or more embodiments is a positive electrode, the active material may be a compound (a lithiated intercalation compound) capable of intercalating and deintercalating lithium. For example, one or more types or kinds of composite oxides of lithium and a metal selected from among cobalt, manganese, nickel, and combinations thereof may be used.

The composite oxide may be a lithium transition metal composite oxide, and examples of the lithium transition metal composite oxide may include a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any one selected from among the following chemical formulas may be used: LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}CO_{b}X_{c}O_{2-α}O_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); and LiₐFePO₄ (0.90≤a≤1.8).

In the foregoing chemical formulas, A may be nickel (Ni), cobalt (Co), manganese (Mn), or a combination thereof; X may be Al, Ni, Co, Mn, Cr, iron (Fe), Mg, Sr, V, a rare earth element, or a combination thereof; D may be oxygen (O), fluorine (F), S, P, or a combination thereof; G may be Al, Cr, Mn, Fe, Mg, lanthanum (La), cerium (Ce), Sr, V, or a combination thereof; and L¹ may be Mn, Al, or a combination thereof.

The active material (e.g., the electrically active material) may be, for example, a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11 Liₐ₁₁Niₓ₁₁M¹¹_{y11}M¹²_{z11}O_{2-b11}X_{b11}

In Chemical Formula 11, 0.9≤a11≤1.8, 0.3≤x11≤1, 0≤y11≤0.7, 0≤z11≤0.7, 0.9≤x11+y11+z11≤1.1, and 0≤b11≤0.1, M¹¹ and M¹² may each independently be one or more elements selected from among Al, B, Ba, Ca, Ce, Co, Cr, Cu, Fe, Mg, Mn, Mo, Nb, Si, Sn, Sr, Ti, V, W, and Zr, and X may be one or more elements selected from among F, P, and S.

In Chemical Formula 11, 0.6≤x11≤1, 0≤y11≤0.4, and 0≤z11≤0.4 or 0.8≤x11≤1, 0≤y11≤0.2, and 0≤z11≤0.2.

Chemical Formula 12 Liₐ₁₂Coₓ₁₂M¹³_{y12}O_{2-b12}X_{b12}

In Chemical Formula 12, 0.9≤a12≤1.8, 0.7≤x12≤1, 0≤y12≤0.3, 0.9≤x12+y12≤1.1, and 0≤b12≤0.1, M¹³ may be one or more elements selected from among Al, B, Ba, Ca, Ce, Cr, Cu, Fe, Mg, Mn, Mo, Ni, Se, Si, Sn, Sr, Ti, V, W, Y, Zn and Zr, and X may be one or more elements selected from among F, P, and S.

Chemical Formula 13 Liₐ₁₃Feₓ₁₃M¹⁴_{y13}PO_{4-b13}X_{b13}

In Chemical Formula 13, 0.9≤a13≤1.8, 0.6≤x13≤1, 0≤y13≤0.4, and 0≤b13≤0.1, M¹⁴ may be one or more elements selected from among Al, B, Ba, Ca, Ce, Co, Cr, Cu, Mg, Mn, Mo, Ni, Se, Si, Sn, Sr, Ti, V, W, Y, Zn, and Zr, and X may be one or more elements selected from among F, P, and S.

Chemical Formula 14 Liₐ₁₄Niₓ₁₄Mn_{y14}M¹⁵_{z14}O_{2-b14}X_{b14}

In Chemical Formula 14, 0.9≤a14≤1.8, 0.8≤x14<1, 0<y14≤0.2, 0≤z14≤0.2, 0.9≤x14+y14+z14≤1.1, and 0≤b14≤0.1, M¹⁵ may be one or more elements selected from among Al, B, Ba, Ca, Ce, Cr, Fe, Mg, Mo, Nb, Si, Sn, Sr, Ti, V, W, and Zr, and X may be one or more elements selected from among F, P, and S.

As an example, the active material (e.g., the electrically active material) may be a high nickel-based active material (e.g., a high nickel-based electrically active material) having a nickel content (e.g., amount) of greater than or equal to about 80 mol%, greater than or equal to about 85 mol%, greater than or equal to about 90 mol%, greater than or equal to about 91 mol%, greater than or equal to about 94 mol%, or greater than or equal to about 99 mol% based on 100 mol% of a metal excluding lithium in the lithium transition metal composite oxide. The high-nickel-based active materials may achieve or provide high capacity (e.g., high electrical capacity) and may be applied to high-capacity (e.g., high electrical capacity), high-density (e.g., high energy density) rechargeable lithium batteries.

If (e.g., when) the electrode according to one or more embodiments is a positive electrode, the active material layer (e.g., the electrically active material layer) may include the active material and may further include a binder and/or a conductive (e.g., electrically conductive) material. In one or more embodiments, the content (e.g., amount) of the active material may be about 90 wt% to ≤ 98 wt%, for example, about 90 wt% to ≤ 95 wt%, based on a total weight of the active material layer. The contents (e.g., amounts) of the binder and the conductive material as described in one or more embodiments may each be about 1 wt% to ≤ 5 wt% based on a total weight of the active material layer.

The binder may serve to adhere the active material particles well or suitably to each other and also to adhere the active material well or suitably to the current collector, and examples of the binder may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but embodiments of the present disclosure are not limited thereto.

The conductive material (e.g., the electrically conductive material) may be used to provide conductivity (e.g., electrical conductivity) to the electrode, and any suitable material that does not cause a chemical change (e.g., an undesirable chemical change) in the rechargeable lithium battery to be formed or provided and that is electronically conductive may be used. For example, the conductive material may include a carbon-based material, such as natural graphite, artificial graphite, carbon black, acetylene black, Ketjen black, a carbon fiber, and/or a carbon nanotube; a metal-based material including copper, nickel, aluminum, silver, and/or the like and in the form of a metal powder and/or a metal fiber; a conductive (e.g., electrically conductive) polymer, such as polyphenylene and/or a polyphenylene derivative; or a mixture thereof.

### Current Collector

If (e.g., when) the electrode according to one or more embodiments is a positive electrode, aluminum foil may be used as the current collector, but embodiments of the present disclosure are not limited thereto.

If (e.g., when) the electrode according to one or more embodiments is a negative electrode, the current collector may be selected from among a copper foil, a nickel foil, a stainless-steel foil, a titanium foil, a nickel foam, a copper foam, a polymer substrate coated with a conductive (e.g., electrically conductive) metal, and a combination thereof, but embodiments of the present disclosure are not limited thereto.

### Rechargeable Lithium Battery

In a rechargeable lithium battery according to one or more embodiments, an electrode assembly may include a stack in which a negative electrode, a separator, and a positive electrode are sequentially stacked, wherein at least one selected from the negative electrode and the positive electrode is the electrode as described in one or more embodiments.

In one or more embodiments, a rechargeable lithium battery including the electrode assembly and an electrolyte may be provided.

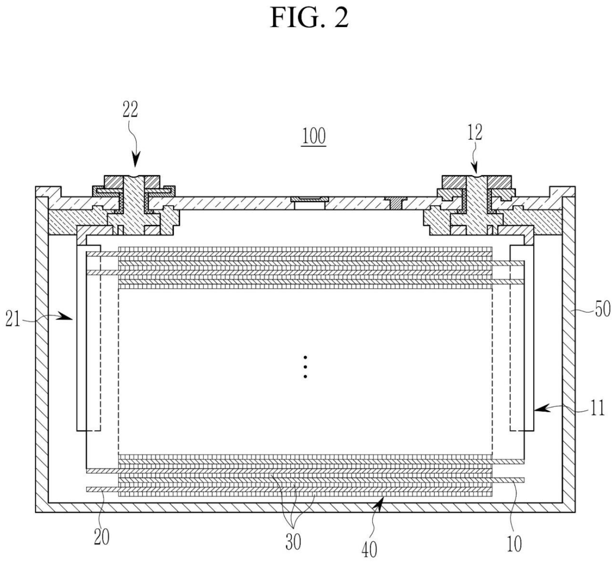

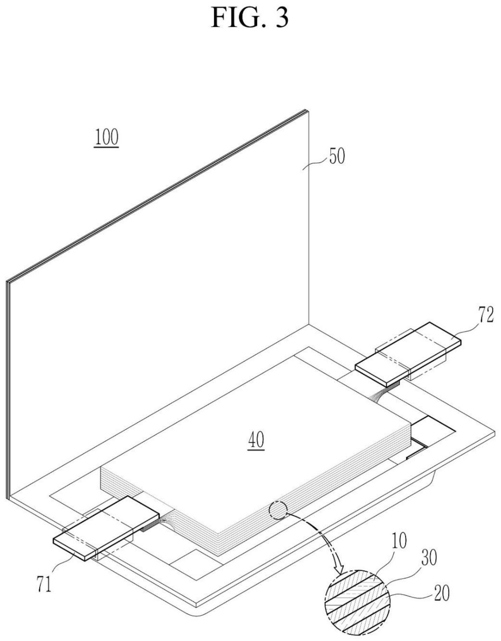

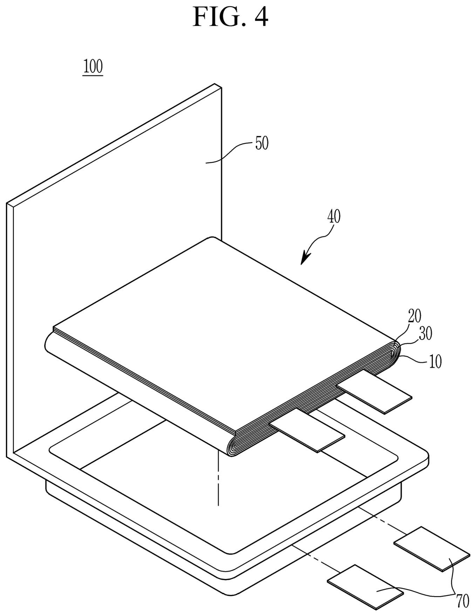

The rechargeable lithium battery may be classified into cylindrical, prismatic, pouch, or coin-type or kind batteries, and/or the like depending on its shape. FIGS. 1 to 4 are schematic views illustrating the rechargeable lithium battery according to one or more embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 may include an electrode assembly 40 having a separator 30 between the positive electrode 10 and the negative electrode 20, and a case 50 in which the electrode assembly 40 is housed. The positive electrode 10, the negative electrode 20, and the separator 30 may be impregnated with/in an electrolyte solution. The rechargeable lithium battery 100 may include a sealing member 60 that seals the case 50 as illustrated in FIG. 1. In FIG. 2, the rechargeable lithium battery 100 may include a positive electrode lead tab 11, a positive electrode terminal 12, a negative electrode lead tab 21, and a negative electrode terminal 22. As illustrated in FIGS. 3 and 4, the rechargeable lithium battery 100 may include an electrode tab 70, for example, a positive electrode tab 71 and a negative electrode tab 72 that serve as an electrical path to induce the current formed in the electrode assembly 40 to the outside.

### Negative Electrode

The rechargeable lithium battery may have or include an electrode according to one or more embodiments that is applied to the negative electrode. In this case, the descriptions of the active material and the negative electrode including the active material are as described in one or more embodiments.

### Positive Electrode

The rechargeable lithium battery may have or include an electrode according one or more embodiments that is applied to the positive electrode. In this case, the descriptions of the active material and the positive electrode including the active material are as described in one or more embodiments.

### Electrolyte

The electrolyte may be an electrolyte solution, which may include a non-aqueous (e.g., water-insoluble) organic solvent and a lithium salt.

The non-aqueous (e.g., water-insoluble) organic solvent may serve as a medium to transmit ions that take part in the electrochemical reaction of a rechargeable lithium battery. The non-aqueous (e.g., water-insoluble) organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethanol, isopropyl alcohol, and/or the like, and the aprotic solvent may include nitriles, such as R-CN (wherein R may be a C2 to C20 linear, branched, or cyclic hydrocarbon group, a double bond, an aromatic ring, an ether group, and/or the like); amides, such as dimethylformamide and/or the like; dioxolanes, such as 1,3-dioxolane, 1,4-dioxolane, and/or the like; sulfolanes, and/or the like.

The non-aqueous (e.g., water-insoluble) organic solvent may be used alone or in a mixture of two or more types or kinds, and if (e.g., when) two or more types or kinds are used in a mixture, a mixing ratio may be appropriately or suitably adjusted according to the desired rechargeable lithium battery performance, which is generally known to those working in the field.

If (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The non-aqueous (e.g., water-insoluble) organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethyl carbonate, vinylene carbonate, and/or an ethylene carbonate-based compound to improve or enhance the cycle-life of a rechargeable lithium battery according to one or more embodiments.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and/or cyanoethylene carbonate.

The lithium salt dissolved in the organic solvent may supply lithium ions in a rechargeable lithium battery, enable a basic operation of a rechargeable lithium battery, and improve or enhance transportation of the lithium ions between the positive electrode and the negative electrode. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to ≤ 2.0 M. If (e.g., when) the concentration of lithium salt is within the foregoing range, the electrolyte solution may have appropriate or suitable ion conductivity and viscosity, and thus excellent or suitable performance may be achieved and lithium ions may move effectively or suitably.

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film, such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one surface or both surfaces (e.g., two opposite surfaces) of the porous substrate.

The porous substrate may be a polymer film formed or composed of any one polymer selected from among polyolefin, such as polyethylene and/or polypropylene, polyester, such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (PTFE; e.g., Teflon^{™}), or a copolymer or mixture of two or more thereof.

The porous substrate may have a thickness of about 1 µm to ≤ 40 µm, for example, about 1 µm to ≤ 30 µm, about 1 µm to ≤ 20 µm, about 5 µm to ≤ 15 µm, or about 10 µm to ≤ 15 µm.

The organic material may include a (meth)acrylic copolymer including a first structural unit derived from (meth)acrylamide and a second structural unit including at least one selected from a structural unit derived from (meth)acrylic acid or (meth)acrylate and a structural unit derived from (meth)acrylamido sulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but embodiments of the present disclosure are not limited thereto. An average particle diameter (D₅₀) of the inorganic particles may be about 1 nm to ≤ 2000 nm, for example, about 100 nm to ≤ 1000 nm or about 100 nm to ≤ 700 nm.

The organic material and the inorganic material may be mixed in one coating layer, or a coating layer including an organic material and a coating layer including an inorganic material may be stacked.

The thickness of the coating layer may be about 0.5 µm to ≤ 20 µm, for example, about 1 µm to ≤ 10 µm or about 1 µm to ≤ 5 µm.

Examples 1 to 3 and Comparative Examples 1 to 3 of the present disclosure are described herein. However, the following examples are only examples of the present disclosure, and embodiments of the present disclosure are not limited to the following examples.

### Example 1

### 1. Manufacturing of Negative Electrode

### (1) Manufacturing of Current Collector Including Coating Layer

40 wt% of carbon black, 10 wt% of carbon nanotube, 40 wt% of poly(ethylene-co-acrylic acid), and 10 wt% of sodium dodecyl sulfate were mixed and then, dispersed in a high-pressure disperser to prepare a coating layer composition, which was coated on a copper foil current collector. The poly(ethylene-co-acrylic acid) included 85 mol% of an ethylene structural unit and 15 mol% of an acrylic acid structural unit based on 100 mol% of the poly(ethylene-co-acrylic acid).

### (2) Manufacturing of Active Material Layer and Current Collector Including Coating Layer

87.0 wt% of a graphite negative electrode active material, 10 wt% of a silicon mono oxide or a silicon/carbon composite, 1.0 wt% of carboxymethyl cellulose, and 2.0 wt% of a styrene butadiene rubber were dispersed in a water solvent to prepare a negative electrode composition. The negative electrode composition was coated on the copper foil current collector on which the coating layer composition was coated and then, dried and compressed to manufacture a negative electrode.

### 2. Manufacturing of Positive Electrode

LiCoO₂ with an average particle diameter (D₅₀) of 15 *µ*m as a positive electrode active material, carbon nanotube (CNT) with an length of 6 *µ*m as a conductive (e.g., electrically conductive) material, and polyvinylidene fluoride (PVdF) as a binder were mixed in a weight ratio of 98.3:0.7:1 and then, mixed with N-methylpyrrolidone (NMP) to manufacture a positive electrode slurry. The manufactured positive electrode composition was coated on an aluminum foil current collector and then, dried and compressed to manufacture a positive electrode. The thickness of the coating layer was 90 *µ*m.

### 3. Manufacturing of Rechargeable Lithium Battery Cell

A polyethylene separator and an electrolyte solution, which was prepared by mixing ethylene carbonate and dimethyl carbonate in a volume ratio of 3:7 to obtain a mixed solvent and dissolving 1 M LiPF₆ in the mixed solvent, were used to manufacture a rechargeable lithium battery cell in a common method.

### Example 2

A negative electrode and a rechargeable lithium battery cell were manufactured in substantially the same manner as in Example 1, except that poly(propylene-co-maleic acid) was used instead of the poly(ethylene-co-acrylic acid) in the manufacturing of the negative electrode.

### Example 3

A negative electrode and a rechargeable lithium battery cell were manufactured in substantially the same manner as in Example 1, except that poly(ethylene-block-acrylic acid) was used instead of the poly(ethylene-co-acrylic acid) in the manufacturing of the negative electrode.

### Comparative Example 1

A negative electrode and a rechargeable lithium battery cell were manufactured in substantially the same manner as in Example 1, except that polyethylene was used instead of the poly(ethylene-co-acrylic acid) in the manufacturing of the negative electrode.

### Comparative Example 2

A negative electrode and a rechargeable lithium battery cell were manufactured in substantially the same manner as in Example 1, except that 97 mol% of an ethylene structural unit and 3 mol% of an acrylic acid structural unit were included based on 100 mol% of the poly(ethylene-co-acrylic acid) in the manufacturing of the negative electrode.

### Comparative Example 3

A negative electrode and a rechargeable lithium battery cell were manufactured in substantially the same manner as in Example 1, except that 50 mol% of an ethylene structural unit and 50 mol% of an acrylic acid structural unit were included based on 100 mol% of the poly(ethylene-co-acrylic acid) in the manufacturing of the negative electrode.

### Evaluation Example 1: Evaluation of Adhesive Strength

The current collectors including each of the coating layers manufactured according to Examples 1 to 3 and Comparative Examples 1 to 3 were cut into a size of a width of 25 mm and a length of 100 mm. A double-sided adhesive tape having an area of a width of 20 mm and a length of 40 mm was adhered to an acrylic plate having an area of a width of 40 mm and a length of 100 mm. After attaching the current collector including the manufactured coating layer to the double-sided adhesive tape, five times lightly pressing it with a hand roller, and mounting it on UTM (20 kgf load cell), the current collector including the coating layer was peeled off by about 25 mm at one portion to fix the current collector including the coating layer to an upper clip of a tensile strength tester, while fixing the double-sided adhesive tape attached to one surface of the positive electrode to a lower clip, and while peeling it at 100 mm/min, 180° peeling strength was measured. Herein, the 180° peeling strength was expressed as adhesive strength, and the results are shown in Table 1.

### Evaluation Example 2: Evaluation of Interface Resistance

The positive electrodes plates for a rechargeable lithium battery according to Examples 1 to 3 and Comparative Examples 1 to 3 were evaluated with respect to electrode plate resistance in a 46-pin resistance measurement method. Mixture resistance and interface resistance thereof were also measured, and the results are shown in Table 1.

**Table 1**

| | Adhesive strength (gf/mm) | Mixture resistance (Ω/cm) | Interface resistance (Ω/cm²) |
|---|---|---|---|
| Example 1 | 20.5 | 2.0 | 0.030 |
| Example 2 | 18.5 | 2.3 | 0.035 |
| Example 3 | 10.8 | 2.9 | 0.048 |
| Comparative Example 1 | 0.5 | 10.9 | 0.104 |
| Comparative Example 2 | 0.6 | 14.7 | 0.099 |
| Comparative Example 3 | 9.4 | 2.7 | 0.042 |

Referring to Table 1, the rechargeable lithium battery cells of Examples 1 to 3, compared with those of Comparative Examples 1 to 3, were confirmed to exhibit equivalent or improved or enhanced adhesive strength with the positive electrode current collector and simultaneously, reduced interface resistance.

### Evaluation Example 3: Small-angle X-ray Scattering (SAXS) Analysis

The copolymer binder of Examples 1 to 3 and Comparative Examples 1 to 3 were analyzed with respect to a structure through small-angle x-ray scattering (SAXS), and the results are shown in Table 2. The small-angle X-ray scattering was performed by using an in-vacuum undulator (λ = 0.734 Å) as a light source, and the measurement proceeded at a scattering vector (q) of 0.008 Å⁻¹ < q < 1.3 Å⁻¹ (q = 4 πλ⁻¹ sin θ/2). The obtained 2D image was converted to a 1D profile, from which a background was removed to obtain an SAXS profile. Intensity (I(q)) of the 1D profile was expressed as a product of a form factor (P(q)) representing an aggregate shape and a structure factor (S(q)) representing an arrangement of structures, and if (e.g., when) a structure peak existed within a range of measuring a scattering vector (q), the structures may be represented by applying the form factor as a spherical aggregate model and the structure factor as a random sphere, a closed-packed sphere, or a random oblate.

A crosslinking point had a size approximated as 2π/q. If there was no structure peak, because a binder in a function layer existed in the form of a polymer chain, it was confirmed that there was no crosslinking point.

**Table 2**

| | Structure peak (q, Å⁻¹) | Crosslinking point size (nm) |
|---|---|---|
| Example 1 | 0.12 | 5.2 |
| Example 2 | 0.09 | 6.9 |
| Example 3 | 0.04 | 15.8 |
| Comparative Example 1 | No crosslinking point | - |
| Comparative Example 2 | No crosslinking point | - |
| Comparative Example 3 | No crosslinking point | - |

Referring to Table 2, the rechargeable lithium battery cells of Examples 1 to 3 were confirmed that a peak was observed within a range of 0.01 Å⁻¹ to 5 Å⁻¹. On the other hand, the rechargeable lithium battery cells of Comparative Examples 1 to 3 were confirmed that no peak was observed.

### Evaluation Example 4: Evaluation of Battery Performance

The rechargeable lithium battery cells of Examples 1 to 3 and Comparative Examples 1 to 3 were charged to 4.65 V at a constant current of 0.2 C, subsequently, maintained at substantially the same voltage to a current of 0.05 C, and discharged to 2.5 V at the constant current of 0.2 C at 25 °C to proceed with first charge and discharge. Herein, the battery cells were measured with respect to initial DC-IR (direct current internal resistance), which are shown in Table 3. Subsequently, the cells were charged to 4.45 V at the constant current of 0.2 C, subsequently, maintained at substantially the same voltage to a current of 0.05 C and discharged to 2.5 V at the constant current 0.2 C 25 °C to proceed with second charge and discharge. In Table 3, second discharge capacity is provided as "4.45 V capacity."

Subsequently, the cells were 50 times or more repeatedly charged and discharged at 1.0 C within a voltage range of 3.0 V to 4.45 V at 45 °C to calculate a ratio of 50^{th} cycle discharge capacity to the second discharge capacity, which is shown as "4.45 V cycle-life" in Table 3.

**Table 3**

| | DC-IR (Ω) | | 4.45 V capacity (mAh/g) | 4.45 V cycle-life (%, @50 cyc) |
|---|---|---|---|---|
| | 50 cycles | 100 cycles | | |
| Example 1 | 1.39 | 1.45 | 4450 | 98.0 |
| Example 2 | 1.41 | 1.45 | 4360 | 97.8 |
| Example 3 | 2.42 | 2.89 | 4090 | 94.5 |
| Comparative Example 1 | 10.90 | 29.80 | 3670 | 50.8 |
| Comparative Example 2 | 10.80 | 27.20 | 3700 | 53.5 |
| Comparative Example 3 | 1.80 | 2.12 | 4190 | 95.5 |

Referring to Table 3, the rechargeable lithium battery cells of Examples 1 to 3, compared with those of Comparative Examples 1 to 3, were confirmed to exhibit reduced DC-IR and equivalent or improved or enhanced capacity and cycle-life characteristics. In the case of Comparative Example 3, the battery performance is similar to Examples 1 to 3, but as can be seen in Evaluation Examples 1 to 3, phase separation does not occur effectively, so it does not function as a crosslinking layer, resulting in reduced adhesive strength.

While the subject matter of the present disclosure has been described in connection with what is presently considered to be practical example embodiments, it is to be understood that the present disclosure is not limited to the disclosed embodiments, but, in one or more embodiments, is intended to cover one or more suitable modifications and equivalent arrangements included within the spirit and scope of the appended claims and equivalents thereof. It therefore will be understood that one or more embodiments described herein are just illustrative but not limitative in all aspects.

**Reference Numerals**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. An electrode, comprising:
a current collector;
a on the current collector; and
an active material layer on the coating layer;
wherein the coating layer comprises a carbon-based conductive material and a copolymer binder, and
the copolymer binder comprises about 5 mol% to ≤ 20 mol% of a hydrophilic structural unit and about 80 mol% to ≤ 95 mol% of a hydrophobic structural unit, based on 100 mol% of the copolymer binder.

2. The electrode as claimed in claim 1, wherein:
a thickness of the coating layer is about 0.3 µm to ≤ 5.0 µm.

3. The electrode as claimed in claim 1 or 2, wherein:
the carbon-based conductive material comprises natural graphite, artificial graphite, carbon black, Denka black, Ketjen black, a carbon nanotube, a carbon nanofiber, graphene, or a combination thereof.

4. The electrode as claimed in any one of claims 1 to 3, wherein:
the copolymer binder is a phase-separable copolymer binder.

5. The electrode as claimed in any one of claims 1 to 4, wherein:
the copolymer binder has a crosslinked structure.

6. The electrode as claimed in any one of claims 1 to 5, wherein:
the electrode has a peak between about 0.01 Å⁻¹ to ≤ 5 Å⁻¹ when small-angle X-ray scattering is measured.

7. The electrode as claimed in any one of claims 1 to 6, wherein:
the copolymer binder comprises a random copolymer, a block copolymer, or a combination thereof.

8. The electrode as claimed in any one of claims 1 to 7, wherein:
the hydrophilic structural unit comprises a unit derived from at least one monomer selected from among acrylic acid, maleic acid, methacrylic acid, itaconic acid, fumaric acid, 2-hydroxyethyl acrylate, vinyl acetate, and vinyl alcohol.

9. The electrode as claimed in any one of claims 1 to 8, wherein:
the hydrophobic structural unit comprises a unit derived from at least one monomer selected from among an aromatic vinyl monomer, an olefin monomer, an unsaturated carboxylic acid alkyl ester monomer, a (meth)acrylic acid monomer, and an unsaturated carboxylic acid amide monomer.

10. The electrode as claimed in any one of claims 1 to 9, wherein:
the copolymer binder is included in an amount of about 20 wt% to ≤ 80 wt% based on 100 wt% of the coating layer.

11. The electrode as claimed in any one of claims 1 to 10, wherein:
a thickness of the active material layer is about 80 µm to ≤ 250 µm.

12. The electrode as claimed in any one of claims 1 to 11, wherein:
the electrode is a negative electrode.

13. The electrode as claimed in any one of claims 1 to 12, wherein:
the electrode is a negative electrode, and the negative electrode comprises a carbon-based negative electrode active material, lithium metal, an alloy of lithium metal, a silicon-based negative electrode active material, or a combination thereof.

14. An electrode assembly (40), comprising:
a stack in which a negative electrode (20), a separator (30), and a positive electrode (10) are sequentially stacked, and
at least one selected from the negative electrode (20) and the positive electrode (10) is the electrode as claimed in any one of claims 1 to 13.

15. A rechargeable lithium battery (100), comprising:
the electrode assembly (40) as claimed in claim 14 and an electrolyte.
